# EUROPÄISCHE PATENTSCHRIFT

(11) **EP 2 748 476 B1**
(45) Veröffentlichungstag und Bekanntmachung des Hinweises auf die Patenterteilung: **21.10.2015**
(21) Anmeldenummer: 12799537.1
(22) Anmeldetag: 29.11.2012
(51) Int. Cl.: F16C 33/12, F16C 33/14, C22C 1/04, C22C 1/10, C23C 24/08, B22F 9/08, B22F 7/08

(54) **VERFAHREN ZUR HERSTELLUNG EINES GLEITLAGERS MIT EINER CuNi2Si-, CuFe2P- oder CuSnX-VERBINDUNG**
METHOD FOR PRODUCING A SLIDING BEARING COMPRISING A CuNi2Si, CuFe2P OR CuSnX COMPOUND
PROCÉDÉ POUR PRODUIRE UN PALIER LISSE AU MOYEN D'UN COMPOSÉ CUNI2SI, CUFE2P OU CUSNX

(30) Priorität: 06.12.2011 DE 102011087798
(43) Veröffentlichungstag der Anmeldung: 02.07.2014
(73) Patentinhaber: Federal-Mogul Wiesbaden GmbH, 65201 Wiesbaden (DE)
(72) Erfinder: SCHMITT, Holger, 64319 Pfungstadt (DE); MEISTER, Daniel, 55246 Mainz-Kostheim (DE); SAXTON, David M., Ann Arbor, Michigan 48108 (US)
(74) Vertreter: Hoffmann Eitle
(86) Internationale Anmeldenummer: PCT/EP2012/073947
(87) Internationale Veröffentlichungsnummer: WO 2013/083471

(56) Entgegenhaltungen:
- EP-A1- 2 184 121
- DE-A1-102009 002 442
- DE-A1-102009 002 894
- GB-A- 648 379
- US-A1- 2003 064 239

## Beschreibung

### Technisches Gebiet

Die vorliegende Erfindung betrifft ein Verfahren zur Herstellung eines Gleitlagers.

### Technischer Hintergrund

Bei Gleitlagern ist es wichtig, dass diese kostengünstig herstellbar sind, während sie gleichzeitig eine hohe Lebensdauer und einen geringen Verschleiß bei Benutzung aufweisen. Ferner sollten Gleitlager eine geringe Reibung mit dem Gegenläufer aufweisen.

Es gibt verschiedene Versuche, solche Gleitlager herzustellen. So offenbart die US 6,498,127 B1 ein Gleitlagermaterial, bei dem eine poröse Kupfer-Zinn-Legierung auf einen Stahlrücken mit Kupferplattierung aufgebracht und dieses Material mit einer Kunstharzschicht bedeckt wird. Hierbei wird als Kupfer-Zinn-Legierung eine Kupfer-Legierung verwendet, die 10 Gewichtsprozent Zinn und 0,2 Gewichtsprozent Phosphor enthält.

Ein anderes Gleitlagermaterial wird in der US 4,404,263 beschrieben. Hierbei wird eine metallische Matrix aus einer Aluminiumlegierung auf einen Rücken aufgetragen, bei der 20 Gewichtsprozent Zinn und zwischen 0 und 3 Gewichtsprozent Kupfer verwendet werden, wobei Al₂O₃-Partikel fein verteilt in der Legierung vorhanden sind.

Ferner beschreibt die US 5,624,887 ein mehrschichtiges Gleitlager, bei dem für die Lagerfläche ein Bronzematerial verwendet wird.

Die DE 10 2009 002 894 A1 beschreibt ein Gleitlager mit einem durch Sintern aufgebrachten Lagerwerkstoff aus CuFe2P, der sich durch gute Wärmeleitfähigkeit auszeichnet.

Schließlich wird in EP 2 341 258 A1 ein Gleitlagermaterial beschrieben, bei dem eine Schicht aus Polytetrafluoroethylen (PTFE) auf eine 0,3 mm dicke Phosphor-Bronze-Schicht, die gesintert wurde, aufgebracht wird.

Ferner ist als bleifreier Werkstoff für Gleitlager der sogenannte "GLYCODUR"-Werkstoff CuSn10 bekannt, wobei "Glycodur" eine geschützte Marke ist. Ein solcher Werkstoff wird z.B. in der US 5,686,176 beschrieben.

US 6,498,127 B1, DE 10 2009 017 362 A1 und EP 2 341 258 A1 bilden relevanten Stand der Technik.

### Darstellung der Erfindung

Ausgehend vom Stand der Technik ergibt sich das Bedürfnis nach einem Werkstoff, der sich durch eine verbesserte Wärmeleitfähigkeit und geringere Rohstoffkosten im Vergleich zum bereits bekannten Glycodur-Werkstoff CuSn10 auszeichnet.

Die Lösung dieser Aufgabe erfolgt durch das in Anspruch 1 beschriebene Verfahren.

Hierbei wird ein Gleitlager hergestellt, bei dem die Lagerfläche, d.h. diejenige Fläche des Gleitlagers, die bei Gebrauch dem Gegenläufer gegenüberliegt, einen Werkstoff aufweist, der auf einem Legierungsmaterial basiert, das wiederum auf CuNi2Si, CuFe2P oder CuSnX (0,01 ≤ X ≤ 9) basiert. Hierbei und im Rest der Anmeldung wird als Schreibweise für Legierungen eine Notation verwendet, die in DIN 1310 beschrieben wird.

Als Vorteil ergibt sich für die genannte Legierung im Vergleich zu CuSn10 eine deutlich bessere Wärmeleitfähigkeit, während die Rohstoffkosten geringer sind. Die hohe Wärmeleitfähigkeit ergibt sich dadurch, dass das BronzeMaterial, welches das Legierungsmaterial bildet, eine hohe Leitfähigkeit, nämlich mindestens 60 Watt/mK, aufweist, was es ermöglicht, Temperaturspitzen zu vermeiden. Durch Einstellen des Zinngehalts können die Härte, mechanischen Eigenschaften und die Gleiteigenschaften der sich ergebenden porösen Lagermetallschicht verbessert werden. Dies trifft u.a. im Hinblick darauf zu, wenn, wie weiter unten beschrieben, das Lagermaterial mit Polytetrafluoroethylen (PTFE) oder anderen Kunststoffen, wie z.B. in der US 5,686,176 beschrieben, imprägniert wird.

Bevorzugte Ausführungsformen werden in den abhängigen Ansprüchen 2 bis 9 beschrieben.

So wird bevorzugt, dass das Legierungsmaterial auf CuSnX basiert, wobei X kleiner als 8, besser kleiner als 6, ist. Es hat sich erwiesen, dass eine möglichst niedrige Zinnkonzentration, insbesondere geringer als der angegebene Grenzwert, eine hohe Wärmeleitfähigkeit erzielt. Ein weiterer Vorteil dieses Bereichs ist, dass sich bei einer Verdüsung des Rohlegierungsmaterials, auf dem der Werkstoff beruht, bei abnehmendem Zinngehalt Pulver ausbilden, die kugeligere Körner aufweisen. Durch einen Zinngehalt, der unterhalb des genannten Werts liegt, können somit Pulver hergestellt werden, deren Partikel eine gute Kugelform aufweisen. Dies hat wiederum den Vorteil, dass die sich daraus beim Sintern ergebende Sintermatrix und ihre Porenstruktur und -verteilung homogener sind.

Es ist weiterhin vorteilhaft, dass das Legierungsmaterial insgesamt zwischen 0,01 und 30 Gewichtsprozent Aluminium, Magnesium, Silizium, Titan, Zirkon, Chrom, Zink, Mangan, Eisen, Kobalt und/oder Nickel aufweist. Diese Materialien ermöglichen es, die mechanischen Eigenschaften und die Gleiteigenschaften des Gleitlagers vorteilhaft einzustellen. Außerdem ermöglichen diese Zusatzstoffe eine Verbesserung des Korrosionswiderstands: ab einem Gehalt von 1% am Gesamtgewicht führen die genannten Elemente zu einer

Verbesserung des Korrosionswiderstandes, der sich dann aber für weiter steigende Anteile nicht wesentlich verbessert, d.h. für 1% wird der maximale Korrosionswiderstand erreicht. Wird ein höherer Anteil verwendet, werden zusätzlich die mechanischen Eigenschaften beeinflusst.

Um die mechanische Belastbarkeit des Gleitlagers einzustellen, hat es sich außerdem als vorteilhaft herausgestellt, Hartpartikel (Oxide, Karbide, Nitride, Silizide und Phosphide), wie zum Beispiel Al₂O₃, SiC, Si₃N₄, Fe₃P, MoSi₂, AlN, MoC₂, SiO₂, etc. in das Gleitlager einzubringen. Diese Materialien erhöhen die Tragfähigkeit des Gleitlagers und verbessern im Falle des Verschleißes bis auf die Bronzeschicht des Lagers dessen Notlaufeigenschaften. Dies liegt an einer Verringerung des Verschleißes aufgrund der Poliereigenschaften der Hartpartikel. Der Übertrag von Bronze auf den Gegenläufer wird verhindert, d.h. die Hartpartikel verhindern die Adhäsion des Gegenläufermaterials am Lagermaterial und das Fressen des Gegenläufers im Lager.

Da das Legierungsmaterial aus einem gesinterten Pulver besteht, kann man ein Material erzeugen, das eine hohe Tragfähigkeit bei geringem Gewicht aufweist und das sich außerdem leicht und flexibel herstellen lässt, dies insbesondere unabhängig von der jeweiligen Form des Gleitlagers. Hierbei ist es insbesondere von Vorteil, wenn die im vorherigen Abschnitt genannten Hartpartikel bereits in dem Pulver, das versintert wird, vorhanden sind. Hierdurch wird die Herstellung des Gleitlagers vereinfacht, da es nicht nötig ist, die Hartpartikel separat hinzuzufügen. Ferner ist ein Vorteil der letztgenannten Variante des Verfahrens, dass es nicht nötig ist, die Hartpartikel separat in die zu nutzenden Pulver einzumischen und sie dafür zu mahlen. Auch lässt sich ein solches Verfahren leichter handhaben, und es tritt keine Entmischung auf: Die Hartpartikel liegen homogen verteilt in der Sinterschicht vor

Bei der Herstellung einer gesinterten Schicht werden bevorzugt diejenigen Pulveranteile verwendet, bei denen die Körner einen durchschnittlichen Durchmesser von > 80 µm aufweisen. Hierdurch wird eine Porosität erzielt, die insbesondere für eine Imprägnierung mit Kunststoff gut geeignet ist.

Um die Gleiteigenschaften des Gleitlagers weiter zu erhöhen, ist es außerdem von Vorteil, Festschmierstoffe wie hexagonales Bornitrid, Kohlenstoff und/oder Molybdänsulfid (MoS₂) in das Legierungsmaterial (Pulver) einzubringen und/oder diese ggf. in das zu versinternde Pulver einzumischen. Dies führt zu einer verringerten Reibung zwischen Gleitlager und Gegenläufer, was als Vorteil mit sich bringt, dass ein geringerer Verschleiß auftritt. Unter den genannten Materialien zeichnet sich hexagonales Bornitrid durch eine hohe Temperaturbeständigkeit aus, während es chemisch inert und unter Luft bis 900°C stabil ist.

Auf das Legierungsmaterial wird erfindungsgemäß PTFE oder ein Kunststoffmaterial aufgebracht, das einen niedrigeren Schmelzpunkt als Polytetrafluoroethylen aufweist. Hierdurch werden die Gleiteigenschaften des Lagers weiter verbessert.

In diesem Zusammenhang wird bevorzugt, dass in das Kunststoffmaterial Hartpartikel wie Oxide, Karbide, Nitride und Phosphide eingebettet sind, wobei hier insbesondere Materialien wie Al₂O₃, SiC, Si₃N₄, Fe₃P, MoSi₂, AlN, MoC₂ oder SiO₂ bevorzugt werden. Hierdurch wird die Tragfähigkeit des Gleitlagers erhöht.

Es hat sich außerdem als vorteilhaft erwiesen, dass in das wenigstens eine Kunststoffmaterial Feststoffschmiermittel wie hexagonales Bornitrid, Molybdänsulfid, Kreide oder Kohlenstoff eingebettet sind. Auch hier ergibt sich als Vorteil, dass die Gleiteigenschaften des Lagers verbessert werden.

Erfindungsgemäß wird das Legierungsmaterial durch Verdüsen eines Rohlegierungsmaterials, sich daran anschließendes Aufbringen des verdüsten und nunmehr pulverförmigen Rohlegierungsmaterials auf einen Stahlrücken und anschließendes Sintern hergestellt. Dieses Verfahren lässt sich leicht und kostengünstig umsetzen. Insbesondere sind Luftverdüser, die für ein solches Verfahren eingesetzt werden können, gut charakterisiert, weshalb Gleitlager mit einer gleichbleibenden Qualität kostengünstig hergestellt werden können. Außerdem kann durch entsprechende Parameterwahl die Korngröße passend eingestellt werden, um ein optimales Gefüge mit offener Porosität zu erhalten.

Erfindungsgemäß ergibt sich ferner, dass das verdüste Rohlegierungsmaterial entsprechend der Korngröße aufgeteilt wird, wobei nur jeweils die Pulverpartikel, die entweder eine größere oder eine kleinere Korngröße als ein festgelegter Wert, bevorzugt 80 µm, aufweisen, für die Bildung des Lagermaterials verwendet werden. Hierdurch ergibt sich als Vorteil, dass man zum einen alle Bestandteile des verdüsten Rohlegierungsmaterials verwenden kann, d.h. dass nur wenig Ausschuss bei dem verdüsten Rohlegierungsmaterial erzeugt wird. Zum anderen kann man gleichzeitig durch selektives Verwenden nur einer Art an Pulverpartikeln ein Gleitlager herstellen, das ein genau definiertes Gefüge im Legierungsmaterial aufweist. Das definierte Gefüge und die homogene Porenstruktur sind wichtig für die gleichmäßige Verteilung des Kunststoffes. Dies ist insbesondere von Vorteil, um gute mechanische und tribologische Eigenschaften des Gleitlagers wie z.B. eine geringe Reibung zu einem Gegenläufer sicherzustellen. Die Bronzeschicht hat im Idealfall bei Gebrauch nie Kontakt zum Gegenläufer, da die Polymerschicht als Gleitschicht dient. Sollte der Gegenläufer durch die Polymerschicht laufen, sind die "Notlaufeigenschaften" der Bronzeschicht von Interesse.

Hierbei ist erfindungsgemäß, dass man für das Aufteilen der Pulverpartikel ein Siebfraktionierungsverfahren verwendet. Ein solches Verfahren ist leicht umsetzbar und führt zu einer hohen Qualität des sich ergebenden, gesiebten Pulvermaterials. Außerdem kann dadurch die gewünschte offene Porosität optimal eingestellt werden, was zu einer homogeneren Sintermatrix führt, wenn das Pulver anschließend gesintert wird.

Es ist außerdem von Vorteil, wenn durch ein gezieltes Mischen von Pulverpartikeln verschiedener Größe die benötigte offene Porosität eingestellt wird. Hierdurch kann ein Gleitlager mit guten mechanischen und tribologischen Eigenschaften hergestellt werden.

### Ausführliche Beschreibung einer bevorzugten Ausführungsform der Erfindung

Im Folgenden wird eine vorteilhafte Ausführungsform der vorliegenden Erfindung beschrieben.

Hierbei wird eine Kupferlegierung mit der Legierungsformel CuSn6Al1, in einem Luftverdüser verdüst. Im Anschluss an diese Verdüsung wird durch ein Siebverfahren der Grobanteil des entstehenden Pulvers, d.h. die Körner mit einer Korngröße von größer als 80 µm, weiter verwendet. Diesem Pulveranteil werden Hartpartikel und Feststoffschmiermittel über einen Mischprozess in einer Kugelmühle oder einem anderen Mischer zugesetzt. Diese Mischung wird auf einen Stahlrücken aus C06-, C10-, C22-, oder C35-Stahl aufgebracht und anschließend bei 800-1000 °C 2-15 min. lang versintert. Anschließend wird eine Beschichtung bestehend aus PTFE (Alternativen: Polyoxymethylen, Polyetherketon, Polyethylen, Polyamid, Polyvynylchlorid, Polyethylenterephthalat, Polycarbonat oder Polypropylen) mit den bereits erwähnten Feststoffschmiermitteln und Hartpartikeln mit einer Dicke von 0-0,5 mm auf das Legierungsmaterial aufgebracht, welches in dessen Poren eindringt und somit eine Lagerfläche bildet. Hierbei entspricht eine Dicke von 0 mm einer Imprägnierung, bei der die Bronzematrix durchscheint.

Das durch den oben genannten Prozess hergestellte Gleitlager zeichnet sich im Vergleich zum Stand der Technik durch verbesserte Gleiteigenschaften, bessere Wärmeleitfähigkeit und eine erhöhte Tragfähigkeit aus.

Der Feinanteil des Pulvers, also diejenigen Anteile des Pulvers, die eine kleinere Korngröße als 80 µm aufweisen, werden in einem ähnlichen Verfahren auch auf einen Stahlrücken aufgebracht und versintert , wodurch Gleitlager für andere Anwendungen hergestellt werden.

## Patentansprüche

1. Verfahren zum Herstellen eines Gleitlagers,
bei dem die Lagerfläche einen Werkstoff aufweist, in dem ein Legierungsmaterial verwendet wird, das auf CuSnX, wobei hier 0,01 < X < 9 gilt, CuNi2Si oder CuFe2P basiert,
bei dem das Legierungsmaterial durch Verdüsen eines Rohlegierungsmaterials, Aufbringen des verdüsten und nunmehr pulverförmigen Rohlegierungsmaterials auf einen Stahlrücken und anschließendes Sintern hergestellt wird,
bei dem das verdüste Rohlegierungsmaterial entsprechend der Korngröße aufgeteilt wird, wobei nur jeweils die Pulverpartikel, die entweder eine größere oder eine kleinere Korngröße als ein vorher festgelegter Wert aufweisen, für das Herstellen des Legierungsmaterials verwendet werden,
bei dem die Aufteilung der Pulverpartikel durch ein Aussieben erfolgt, und bei dem auf das Legierungsmaterial PTFE oder ein Kunststoffmaterial, das einen niedrigeren Schmelzpunkt als PTFE aufweist, aufgebracht wird.

2. Verfahren nach Anspruch 1, wobei das Legierungsmaterial auf CuSnX basiert, wobei hier X < 8, bevorzugt X < 6, gilt.

3. Verfahren nach Anspruch 1 oder 2, bei dem das Legierungsmaterial insgesamt zwischen 0,01 und 30 Gewichtsprozent Al, Mg, Si, Ti, Zr, Cr, Zn, Mn, Fe, Co und/oder Ni aufweist.

4. Verfahren nach Anspruch 1, 2 oder 3, bei dem das Legierungsmaterial Hartpartikel wie Oxide, Carbide, Nitride, Silizide und/oder Phosphide wie Al₂O₃, SiC, Si₃N₄, Fe₃P, MoSi₂, AlN, MoC₂, SiO₂ enthält.

5. Verfahren nach einem der vorherigen Ansprüche, bei dem auf das Legierungsmaterial Festschmierstoffe wie hexagonales Bornitrid, Molybdänsulfid und/oder Kohlenstoff aufgebracht oder diese im Legierungsmaterial enthalten sind.

6. Verfahren nach einem der vorhergehenden Ansprüche, bei dem in das Kunststoffmaterial Hartpartikel wie Oxide, Carbide, Nitride, Silizide oder Phosphide wie z.B. Al₂O₃, SiC, Si₃N₄, Fe₃P, MoSi₂, AlN, MoC₂, SiO₂ eingebettet sind.

7. Verfahren nach einem der hervorgehenden Ansprüche, bei dem in das Kunststoffmaterial Feststoffschmiermittel wie hexagonales Bornitrid, Kreide, Molybdänsulfid und/oder Kohlenstoff eingebettet sind.

8. Verfahren nach einem der vorhergehenden Ansprüche, bei dem der vorher festgelegte Wert 80 µm ist.

9. Verfahren.nach einem der vorhergehenden Ansprüche, bei dem durch gezieltes Mischen von Partikeln von verschiedenen Korngrößen die offene Porosität des Gleitlagers eingestellt wird.

## Claims

1. Method for the manufacture of a plain bearing,
in which the bearing surface has a material in which an alloying material based on CuSnX, where 0.01 < X < 9, CuNi2Si or CuFe2P is used,
in which the alloying material is made by atomising a raw alloying material, applying the atomised and now powdered raw alloying material to a steel back and then sintering,
in which the atomised raw alloying material is divided up according to particle size, only the powder particles which have either a greater or a smaller particle size than a predetermined value being used to make the alloying material,
in which the powder particles are divided up by sifting, and
in which PTFE or a plastic material which has a lower melting point than PTFE is applied to the alloying material.

2. Method according to claim 1, wherein the alloying material is based on CuSnX, where X < 8, preferably X < 6.

3. Method according to claim 1 or 2, in which the alloying material has in total between 0.01 and 30 weight per cent Al, Mg, Si, Ti, Zr, Cr, Zn, Mn, Fe, Co and/or Ni.

4. Method according to claim 1, 2 or 3, in which the alloying material contains hard particles such as oxides, carbides, nitrides, silicides and/or phosphides such as Al₂O₃, SiC, Si₃N₄, Fe₃P, MoSi₂, AlN, MoC₂, SiO₂.

5. Method according to any of the preceding claims, in which solid lubricants such as hexagonal boron nitride, molybdenum sulphide and/or carbon are applied to the alloying material or they are contained in the alloying material.

6. Method according to any of the preceding claims, in which hard particles such as oxides, carbides, nitrides, silicides or phosphides, e.g. Al₂O₃, SiC, Si₃N₄, Fe₃P, MoSi₂, AlN, MoC₂, SiO₂, are embedded in the plastic material.

7. Method according to any of the preceding claims, in which solid lubricants such as hexagonal boron nitride, chalk, molybdenum sulphide and/or carbon are embedded in the plastic material.

8. Method according to any of the preceding claims, in which the predetermined value is 80 µm.

9. Method according to any of the preceding claims, in which, by selective mixing of particles of different particle sizes, the open porosity of the plain bearing is adjusted.

## Revendications

1. Procédé de production d'un palier lisse,
dans lequel la surface du palier comprend un matériau dans lequel on utilise une matière d'alliage qui est à base de CuSnX,où 0,01 < X < 9, de CuNi2Si ou de CuFe2P,
dans lequel la matière d'alliage est produite par atomisation d'une matière première d'alliage, dépôt de la matière première d'alliage atomisée et à présent pulvérulente sur un support en acier, et frittage consécutif,
dans lequel la matière première d'alliage atomisée est répartie en fonction de la granulométrie, seules les particules de poudres qui présentent une granulométrie soit supérieure soit inférieure à une valeur déterminée à l'avance étant utilisées pour la production de la matière d'alliage,
dans lequel la répartition des particules de poudre s'effectue par tamisage et
dans lequel du PTFE ou une matière plastique qui présente un point de fusion inférieur au PTFE est déposé sur la matière d'alliage.

2. Procédé selon la revendication 1, dans lequel la matière d'alliage est à base de CuSnX, où X < 8, de préférence X < 6.

3. Procédé selon la revendication 1 ou 2, dans lequel la matière d'alliage présente au total entre 0,01 et 30 % en poids de Al, Mg, Si, Ti, Zr, Cr, Zn, Mn, Fe, Co et/ou Ni.

4. Procédé selon la revendication 1, 2 ou 3, dans lequel la matière d'alliage contient des particules dures comme des oxydes, des carbures, des nitrures, des siliciures et/ou des phosphures comme Al₂O₃, SiC, Si₃N₄, Fe₃P, MoSi₂, AlN, MoC₂, SiO₂.

5. Procédé selon l'une des revendications précédentes, dans lequel des lubrifiants solides comme le nitrure de bore hexagonal, le sulfure de molybdène et/ou le carbone sont déposés sur la matière d'alliage ou présents dans la matière d'alliage.

6. Procédé selon l'une des revendications précédentes, dans lequel des particules dures comme des oxydes, des carbures, des nitrures, des siliciures ou des phosphures comme par exemple Al₂O₃, SiC, Si₃N₄, Fe₃P, MoSi₂, AlN, MoC₂, SiO₂ sont incorporées dans la matière plastique.

7. Procédé selon l'une des revendications précédentes, dans lequel des lubrifiants solides comme le nitrure de bore hexagonal, la craie, le sulfure de molybdène et/ou le carbone sont incorporés dans la matière plastique.

8. Procédé selon l'une des revendications précédentes, dans lequel la valeur déterminée à l'avance est 80 µm.

9. Procédé selon l'une des revendications précédentes, dans lequel la porosité ouverte du palier lisse est ajustée par mélange ciblé de particules de différentes granulométries.
